# EUROPÄISCHE PATENTSCHRIFT

(11) **EP 3 504 054 B1**
(45) Veröffentlichungstag und Bekanntmachung des Hinweises auf die Patenterteilung: **08.12.2021**
(21) Anmeldenummer: 17758026.3
(22) Anmeldetag: 09.08.2017
(51) Int. Cl.: B29D 30/06

(54) **VERFAHREN UND VORRICHTUNG ZUM VULKANISIEREN VON REIFEN**
METHOD AND DEVICE FOR VULCANIZING TIRES
PROCÉDÉ ET DISPOSITIF DE VULCANISATION DE PNEUS

(30) Priorität: 25.08.2016 DE 102016010426
(43) Veröffentlichungstag der Anmeldung: 03.07.2019
(73) Patentinhaber: Harburg-Freudenberger Maschinenbau GmbH, 21079 Hamburg (DE)
(72) Erfinder: GRIMM, Arnd, 31655 Stadthagen (DE); STELLMACHER, Jan, 20357 Hamburg (DE)
(74) Vertreter: Klickow & Wetzel PartGmbB
(86) Internationale Anmeldenummer: PCT/DE2017/000252
(87) Internationale Veröffentlichungsnummer: WO 2018/036575

(56) Entgegenhaltungen:
- EP-A2- 1 090 729
- WO-A1-2015/165430
- DE-A1- 1 729 860
- DE-A1-102006 058 685
- US-A- 1 456 425
- US-A- 2 763 317
- US-A1- 2002 153 638

## Beschreibung

Die Erfindung betrifft ein Verfahren zum Vulkanisieren von Reifen bei dem der zu vulkanisierende Reifen im Bereich einer Reifenheizpresse in eine Form eingesetzt wird und bei dem die Form beheizt wird und bei dem in den Bereich der innenliegenden Oberfläche des Reifens ein Fluid zur Wärmeübertragung geleitet wird.

Die Erfindung betrifft darüber hinaus eine Vorrichtung zum Vulkanisieren von Reifen, die mindestens eine beheizbare Form für den zu vulkanisierenden Reifen sowie eine Leitvorrichtung für ein zur Wärmeübertragung vorgesehenes Fluid aufweist, wobei die Leitvorrichtung an einen Balg anschließbar ist.

Bislang bekannte Heizpressen besitzen als Balg ein kissenartig aufblasbares flexibles Element. Das Aufblasen erfolgt typischerweise mit Druckluft und/oder Heißdampf. Ein Innendruck des Balges während des Vulkanisierens liegt häufig in einem Bereich von 10 bar bis 30 bar.

Der Balg besitzt einen Durchmesser ähnlich zum Außendurchmesser des Reifens. Von der gesamten Oberfläche des Balges werden die durch den Innendruck erzeugten Kräfte auf die Formen der Heizpresse übertragen und machen einen Schließdruck von oft mehreren 100 Tonnen erforderlich. Dies führt zu den bekannten sehr stabilen Konstruktionen von Heizpressen und den hieraus resultierenden Herstellungskosten.

Tatsächlich genutzt zur Abstützung des Reifenrohlings wird nur ein ringförmig umlaufender kleiner Bereich des in radialer Richtung außenliegenden Umfanges des Balges. Für Reifen mit einem Laufprofil wird dieses Profil durch das Hineindrücken in die Form erzeugt. Nach dem Abschluss des Vulkanisiervorganges liegt deshalb eine Verzahnung der Lauffläche des Reifens mit dem Gegenprofil der Form vor. Dies führt dazu, dass zweiteilige Formen nur bei Reifen mit geringer Profilierung verwendet werden können. Bei stärkeren Profilierungen werden die Formen der Reifenheizpresse mit radial auseinander fahrbaren Segmenten versehen, um den durch die Vulkanisierung erzeugten Formschluss aufzuheben.

Aus der US 2 763 317 A sind bereits ein Verfahren und eine Vorrichtung zum Vulkanisieren von Reifen bekannt. Der zu vulkanisierende Reifen wird in eine Reifenheizpresse in eine Form eingesetzt und die Form wird beheizt. Es wird ein Träger für ein expandierbaren Balg verwendet und ein Fluid zur Wärmeübertragung wird in den Bereich einer innenliegenden Oberfläche des Reifens geleitet.

Ähnliche Verfahren und Vorrichtungen werden auch in der US 1 456 425 A, der DE 17 29 860 A1 sowie der US 2002/153638 A1 beschrieben. Weitere Heizpressen für zu vulkanisierende Reifen werden in der DE 10 2006 058685 A1, der EP 1 090 729 A2 sowie der WO 2015/165430 A1 beschrieben.

Eine Aufgabe der Erfindung ist es, eine Vorrichtung derart zu gestalten, dass die erforderlichen Schließkräfte einer Reifenheizpresse wesentlich reduziert werden können.

Diese Aufgabe wird erfindungsgemäß durch die Merkmale von Patentanspruch Nr. 7 gelöst.

Es wird erfindungsgemäß kein kissenartiger Balg verwendet, sondern der Balg besteht entweder aus einem radial umlaufenden Schlauch oder aus einem radial zweiseitig festgeklemmten Druckkissen. Dieses radial umlaufende Druckkissen oder der Balg erstrecken sich radial umlaufend auf einer felgenartigen Innenkonstruktion. Der Innenbereich dieser Felge ist drucklos und macht somit keine Schließkräfte erforderlich.

Der Balg ist aus einem elastischen Material gefertigt, während die Trägerkonstruktion aus einem festen Material, beispielsweise Metall, gefertigt ist.

In Abhängigkeit von der konstruktiven Realisierung ist es möglich, die Schließkräfte und somit auch die mechanische Stabilität der Heizpresse auf etwa zehn Prozent zu reduzieren. Dies hat erhebliche Verringerungen bei den Herstellungskosten zur Folge.

Eine weitere Aufgabe der Erfindung ist es, ein Verfahren zur Reifenherstellung derart zu definieren, dass die erforderlichen Schließkräfte einer Heizpresse wesentlich reduziert werden.

Diese Aufgabe wird erfindungsgemäß Durch die Merkmale von Patentanspruch Nr. 1 gelöst.

Die Verwendung eines derartigen ringförmigen Balges mit einem felgenartigen Träger ermöglicht es, die Zeiten für die Beladung und die Entladung der Heizpresse zu optimieren. Derzeit sind häufig die Beladesysteme und die Entladesysteme fest einer Heizpresse zugeordnet. Mindestens 80 Prozent der Prozesszeit werden für die Durchführung der Vulkanisierung benötigt, nur 20 Prozent für das Beladen und das Entladen. Während des Vulkanisiervorganges sind somit die Systeme zum Beladen und zum Entladen untätig.

Eine weitere Aufgabe der Erfindung ist es daher, ein Verfahren und eine Vorrichtung derart zu gestalten, dass die Systeme in Bezug auf ihre Be- und Entladezeit sowie die Prozesszeit für die Durchführung der Vulkanisierung optimiert werden.

Diese Aufgabe wird erfindungsgemäß dadurch gelöst, dass die aus Balg und Träger bestehende Einheit in einer vorteilhaften Ausführungsform transportabel ausgeführt ist und dass der Reifen auf dem Ring-Balgsystem als mobilem Bestandteil einer Heizpresse vulkanisierbar ist.

Bei einer Ausbildung von Balg und Träger als transportable Einheit ist es möglich, mehreren Heizpressen eine gemeinsame Bestückungseinrichtung zuzuordnen, die auf dem Träger mit Balg einen entsprechenden Rohreifen anordnet. Ebenfalls kann ein gemeinsames Entladesystem für fertig vulkanisierte Reifen mit einer Rückführung der Einheit aus Balg und Träger realisiert werden.

Im Bereich der Heizpresse ist für eine vorteilhafte Ausführungsform des erfindungsgemäßen Verfahrens und der erfindungsgemäßen Vorrichtung an eine voll automatische Durchführung bzw. Durchführbarkeit von Beladung, Entladung und Vulkanisation gedacht.

Das erfindungsgemäße Verfahren dient zum Herstellen von Fahrzeugreifen mit einem zirkulierendem Ring-Balgsystem (COR) der Heizpresse. Vorrangig ist das Verfahren für Zweirad-Reifen, beispielsweise für Fahrräder, Motorräder oder Roller, gedacht. Es ist aber auch eine Anwendung in anderen Bereichen, beispielsweise in der PKW- oder der LKW-Reifenherstellung, denkbar.

Reifenrohlinge sind sehr formunstabil und lassen sich mit bekannter Technik nicht einfach handhaben. Deshalb wird erfindungsgemäß ein Ring-Balgsystem verwendet, das in einer Funktionseinheit für Einformen, Transport, Vulkanisation, Nachbehandlung und Entformen genutzt werden kann.

Das erfindungsgemäße Ring-Balgsystem wird in einer vorteilhaften Ausführungsform des erfindungsgemäßen Verfahrens in einem Kreislauf benutzt. Ein Bediener überwacht den Kreislauf und legt manuell den Rohling um das Ring-Balgsystem. Alternativ ist auch an eine automatisierte Aufbringung des Rohlings auf das Ring-Balgsystem gedacht. In jeder Bearbeitungsstation ist das Ring-Balgsystem an das erforderliche Medium (Luft, Vulkanisiermedium (Dampf/N2/Heißwasser), Vakuum) anschließbar. Der Transport des Rohlings auf dem Ring-Balgsystem kann mit Luft als Medium erfolgen.

Vorteile des erfindungsgemäßen Verfahrens und der erfindungsgemäßen Vorrichtung sind neben der verbesserten Erfüllung der genannten technischen Aufgaben eine schonende Behandlung des Reifenrohlings, die Einhaltung von Sicherheitsregeln durch größere Abstände von Personal zu gefährlichen Bewegungen, der Entfall der Notwendigkeit manueller Eingriffe in den Prozess insbesondere im Hinblick auf die Produktion von Zweirad-Reifen, die Ermöglichung einer direkten Qualitätskontrolle durch den Bediener im Anschluss an den Prozess und damit die Vermeidung von zusätzlichem Ausschuss bei nachgeschalteter Qualitätssicherung sowie die Kombinierbarkeit von Ring-Balgsystemen für andere Reifengrößen.

Im Folgenden werden das erfindungsgemäße Verfahren und die Erfindungsgemäße Vorrichtung in beispielhafter Ausführungsform erläutert. Es zeigt:
- Fig. 1: eine perspektivische Ansicht eines erfindungsgemäßen Ring-Balgsys-tems,
- Fig. 2: einen Schnitt des erfindungsgemäßen Ring-Balgsystems,
- Fig. 3: eine Darstellung des Kreislaufs des erfindungsgemäßen Verfahrens,
- Fig. 4: eine Darstellung des Beladungsschrittes des erfindungsgemäßen Verfahrens,
- Fig. 5: eine Darstellung des Transportschrittes des erfindungsgemäßen Verfahrens,
- Fig. 6: eine Darstellung des Vulkanisierschrittes des erfindungsgemäßen Verfahrens,
- Fig. 7: eine Darstellung des Transportschrittes des erfindungsgemäßen Verfahrens nach dem Vulkanisiervorgang und
- Fig. 8: eine Darstellung des Entladeschrittes des erfindungsgemäßen Verfahrens.

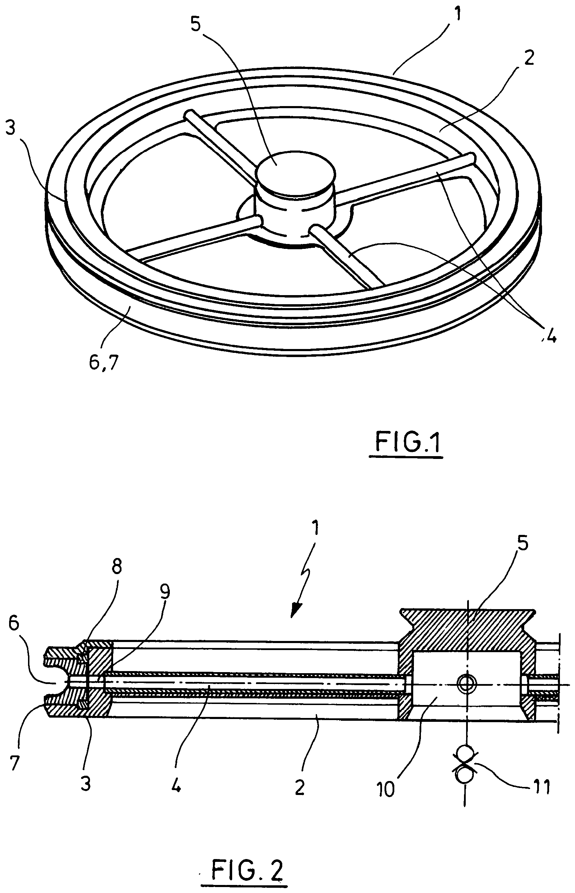

In Fig. 1 ist eine perspektivische Darstellung einer vorteilhaften Ausführungsform des erfindungsgemäßen Ring-Balgsystems (1) gezeigt. Die felgenartige Trägerkonstruktion (2) besteht aus einem Ring (3), der mittels vier speichenartiger Streben (4) mit einem Mittelstück (5) verbunden ist. An seiner außenliegenden Seite weist der Ring (2) eine umlaufende Nut (6) auf, in der der Balg (7) in einem kontrahierten Zustand liegt.

Fig. 2 zeigt einen Schnitt durch die in Fig. 1 gezeigte Ausführungsform des erfindungsgemäßen Ring-Balgsystems (1). Der Balg (7) liegt in der umlaufenden Nut (6) und ist mit Hilfe einer Befestigungsstruktur (8) am Ring (3) befestigt. Die Streben (4) sind rohrartig ausgeführt, sodass sie einen Hohlraum (9) im Ring (3) mit einem Hohlraum (10) im Mittelstück (5) verbinden. Über das dadurch definierte Leitungssystem kann das für einen Prozessschritt benötigte Medium über ein Anschlussstück (11) durch den Träger zum Balg (7) geleitet werden. Mithilfe eines Überdruckes im Leitungssystem lässt sich der Balg (7) expandieren, durch einen Unterdruck bzw. ein Vakuum lässt sich der Balg (7) kontrahieren und in der Nut (6) versenken. Das Leitungssystem muss eine den Anforderungen der Reifenheizpresse entsprechende Dichtigkeit aufweisen.

Es ist auch daran gedacht, den Ring (3) des Trägers (2) in einen oberen und einen unteren Teil zu separieren, deren Abstand sich zum Beispiel über Gewindestangen einstellen lässt, um den Be- und Entladevorgang des Ring-Balgsystems (1) zu erleichtern.

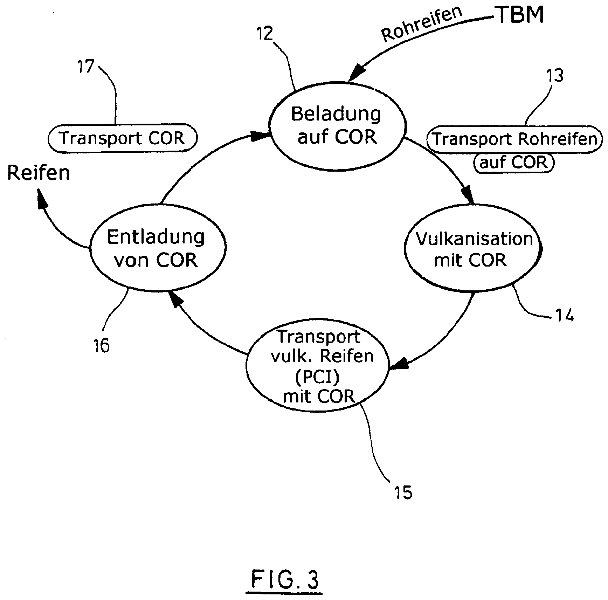

Fig. 3 zeigt eine vorteilhafte Ausführungsform des erfindungsgemäßen Vulkanisationsverfahrens als Kreislauf. Im ersten Schritt (12) wird der Rohreifen (18), von der Reifenaufbaumaschine (TBM: Tire-Building-Machine) kommend, auf das erfindungsgemäße Ring-Balgsystem (1) einer Heizpresse geladen. Schritt zwei (13) ist der Transport des Rohlings auf dem Ring-Balgsystem (1) zum Vulkanisationsschritt (14), in dem die Vulkanisation des Reifens in einer Heizpresse vorgenommen wird. In einem folgenden Schritt (15) wird der vulkanisierte Reifen auf dem Ring-Balgsystem (1) zum Entladeschritt (16) transportiert. In diesem Schritt (15) wird der Reifen in einer vorteilhaften Ausführungsform des erfindungsgemäßen Verfahrens nach der Vulkanisation auf dem Ring-Balgsystem (1) von innen mithilfe von Druckluft expandiert (PCI: Post-Cure-Inflator). Es handelt sich bei dem PCI um eine Einrichtung zur Druckluftabstützung des vulkanisierten Reifens nach seiner Entnahme aus der Form der Heizpresse. Alternativ kann der vulkanisierte Reifen auf dem Ring-Balgsystem (1) auch ohne PCI-Schritt (15) zum Entladeschritt (16) transportiert werden. Im Entladeschritt (16) wird der Reifen von dem Ring-Balgsystem (1) entladen. Anschließend folgt ein weiterer Transportschritt (17) des Ring-Balgsystems (1) nun ohne Reifen, um im Kreislauf der gezeigten Ausführungsform des erfindungsgemäßen Verfahrens wieder mit dem Beladungsschritt (12) beginnen zu können.

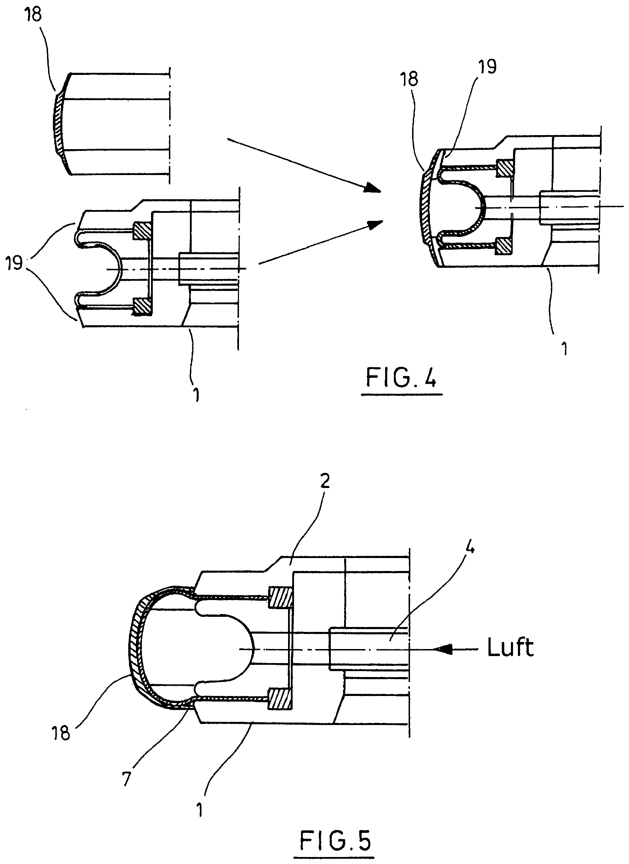

Fig. 4 zeigt schematisch das Beladen (12) des erfindungsgemäßen Ring-Balgsystems (1). Der Rohreifen (18) wird auf das Ring-Balgsystem (1) aufgezogen und ausgerichtet. Dabei ist die Mitte der Lauffläche des Rohreifens (18) mittig auf dem Ring-Balgsystem (1) zu positionieren. Die äußere Kontur des Ring-Balgsystems (1) begünstigt die Ausrichtung des Rohreifens (18) in der gezeigten vorteilhaften Ausführungsform durch eine Verjüngung (19) nach oben und unten.

In Fig 5. ist das erfindungsgemäße Ring-Balgsystem (1) mit einem Rohreifen (18) beladen und wird in einem Transportschritt (13) transportiert. Während des Transportschritts (13) wird eine Vorformung des Reifenrohlings (18) dadurch ermöglicht, dass der Balg (7) des Ring-Balgsystems (1) expandierbar ist. Zusätzlich zur Vorformung sichert ein expandierter Balg (7) den Rohreifen (18) während des Transports auf dem Ring-Balgsystem (1). In einer vorteilhaften Ausführungsform des erfindungsgemäßen Verfahrens wird als Medium Luft mit einem Druck von 1 bar bis 10 bar und einer Temperatur von 10°C bis 100°C in das Ring-Balgsystem (1) gepumpt. In einer besonders vorteilhaften Ausführungsform des erfindungsgemäßen Verfahrens wird ein Druck von 3 bar bis 7 bar und eine Temperatur zwischen 20°C und 50°C für den Prozessschritt (13) verwendet.

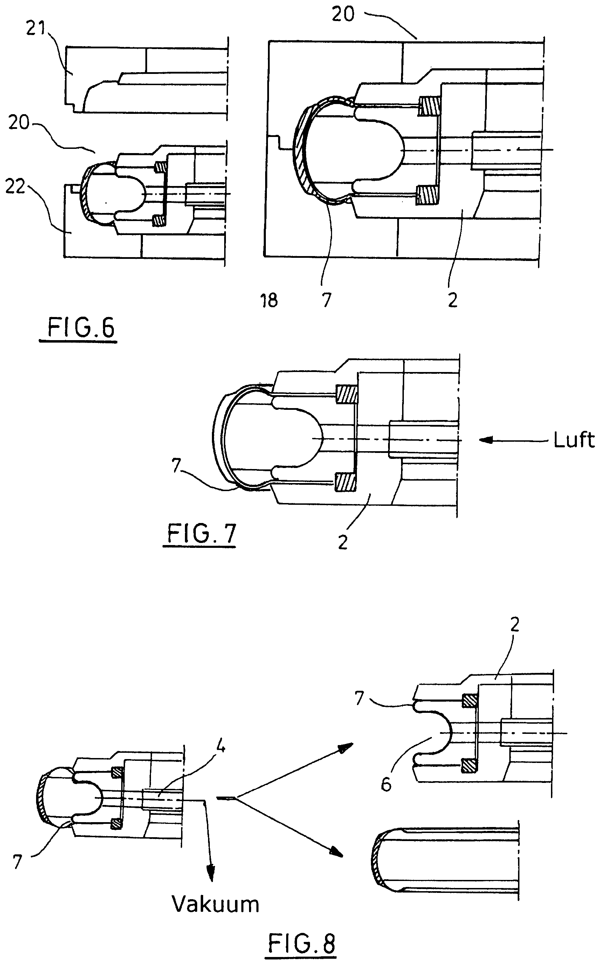

Fig. 6 zeigt schematisch den Vulkanisationsschritt (14) und die Vulkanisationsvorrichtung (20). Die Vulkanisationsvorrichtung (20) besteht neben dem Ring-Baigsystem (1) aus mindestens einer oberen (21) und einer unteren Form (22), die das äußere Profil des Reifens vorgeben. Zur Erzeugung der für den Vulkanisationsprozess erforderlichen Temperaturen ist über das Anschlussstück (11) ein beheiztes Vulkanisationsmedium unter einem Überdruck in den Balg (7) einleitbar. Die Erzeugung der benötigten Temperatur und des benötigten Druckes kann in einem nicht gezeigten Teil der Heizpresse (20) erfolgen.

Der Vulkanisationsschritt (14) beinhaltet das Positionieren des erfindungsgemäßen Ring-Balgsystems (1) mit Reifenrohling (18) in einer Reifenheizpresse (20), die Verbindung des Anschlussstücks (11) mit dem Kreislauf des Vulkanisationsmediums, das Schließen der Formen (21, 22) der Reifenheizpresse (20), die Formung des Reifenrohlings (18) durch ein mit Überdruck zugeführtes Medium in den Balg (7) und das Vulkanisieren des Rohreifens (18) durch entsprechende Zufuhr von Hitze mithilfe des Vulkanisationsmediums. Der Druck liegt in einer vorteilhaften Ausführungsform des erfindungsgemäßen Verfahrens in einem Bereich von 10 bar bis 30 bar und die Temperatur liegt zwischen 100°C und 200°C.

Eine besonders vorteilhafte Ausführungsform des Verfahrens nutzt einen Druck zwischen 15 bar und 25 bar und eine Temperatur zwischen 120°C und 180°C für das Vulkanisationsmedium. Nach Abschluss des eigentlichen Vulkanisationsvorganges werden Druck und Temperatur des Mediums im Balg (7) reduziert und die Formen (21, 22) der Heizpresse (20) werden geöffnet.

Fig. 7 zeigt das erfindungsgemäße Ring-Balgsystem (1) im Transportschritt (15) mit PCI des erfindungsgemäßen Verfahrens. Nach der Vulkanisation des Reifens wird mit Überdruck Luft in den Balg (7) gepumpt, um den Reifen und dessen Form zu sichern. Druck und Temperatur entsprechen in diesem Prozessschritt (15) in vorteilhafter Ausführung den im Schritt "Transport des Rohreifens" (13) genannten Werten.

In Fig. 8 ist das erfindungsgemäße Ring-Balgsystem (1) im Entladeschritt (16) dargestellt. Der Entladeschritt (16) beinhaltet das Abpumpen von dem im Ring-Balgsystem (1) befindlichen Medium, beispielsweise von möglicherweise im Transportschritt mit PCI (15) in das Ring-Balgsystem (1) gepumpter Luft, sodass der Balg (7) durch einen Unterdruck kontrahiert, schließlich in die umlaufende Nut (6) des Ring-Balgsystems (1) gesaugt wird und den Reifen freigibt. Reifen und Ring-Balgsystem (1) werden daraufhin getrennt.

Mithilfe des erfindungsgemäßen Verfahrens und der erfindungsgemäßen Vorrichtung lassen sich somit eine wesentlich effizientere Nutzung der insbesondere im Vulkanisationsprozess benötigten Energie in Form von Druck und Hitze sowie eine effizientere Nutzung der in der Reifenherstellung benötigten Ressourcen, wie zum Beispiel der restlichen Reifenheizpresse, realisieren. Zudem wird der Forminstabilität der Reifenrohlinge durch deren Transport auf dem erfindungsgemäßen Ring-Balgsystem (1) entgegengewirkt.

## Patentansprüche

1. Verfahren zum Vulkanisieren von Reifen bei dem der zu vulkanisierende Reifen im Bereich einer Reifenheizpresse (20) in eine Form (21, 22) eingesetzt wird und bei dem die Form (21, 22) beheizt wird und bei dem in den Bereich der innenliegenden Oberfläche des Reifens ein Fluid zur Wärmeübertragung geleitet wird sowie bei dem ein Träger (2) für einen expandierbaren Balg (7) verwendet wird, wobei der Träger (2) mit einer ringartigen Gestalt versehen wird, und wobei das Fluid in einen Balg (7) eingeleitet wird, so dass ein Ring-Balgsystem entsteht, **dadurch gekennzeichnet,**
**dass** vollständig oder in Teilen die Verfahrensschritte "Beladen des Ring-Balgsystems" (12), "Transport des Rohreifens auf dem Ring-Balgsystem" (13), "Vulkanisation des Reifens auf dem Ring-Balgsystem" (14), "Transport des vulkanisierten Reifens auf dem Ring-Balgsystem" (15), "Entladen des vulkanisierten Reifens vom Ring-Balgsystem" (16) und "Transport des Ring-Balgsystems ohne Reifen" (17) durchgeführt werden.

2. Verfahren zum Vulkanisieren von Reifen nach Anspruch 1, **dadurch gekennzeichnet, dass** ein Ring-Balgsystem (1) als mobiler Bestandteil einer Reifenheizpresse (20) verwendet wird, auf dem ein Reifen im Herstellungsprozess transportiert wird und auf dem der Reifen vulkanisiert wird.

3. Verfahren zum Vulkanisieren von Reifen nach Anspruch 1, **dadurch gekennzeichnet, dass** ein Ring-Balgsystem (1) fester Bestandteil einer Reifenheizpresse (20) ist.

4. Verfahren zum Vulkanisieren von Reifen nach einem der Ansprüche 1 bis 3, **dadurch gekennzeichnet, dass** die einzelnen Schritte des Verfahrens gemeinsam einen Kreislauf bilden.

5. Verfahren zum Vulkanisieren von Reifen nach mindestens einem der vorstehenden Ansprüche, **dadurch gekennzeichnet, dass** der Balg (7) des Ring-Balgsystems (1) während des Transports des Rohreifens (18) und/oder des vulkanisierten Reifens expandiert wird.

6. Verfahren zum Vulkanisieren von Reifen nach mindestens einem der vorstehenden Ansprüche, **dadurch gekennzeichnet, dass** für mindestens einen individuellen Prozessschritt ein Medium unter einem Druck zwischen 1 bar und 30 bar und mit einer Temperatur zwischen 10 °C und 200 °C in das Ring-Balgsystem (1) gepumpt wird oder aus diesem abgepumpt wird.

7. Vorrichtung zum Vulkanisieren von Reifen, die mindestens eine beheizbare Form (21, 22) für den zu vulkanisierenden Reifen sowie eine Leitvorrichtung (4, 9, 10) für ein zur Wärmezuführung vorgesehenes Fluid aufweist, wobei die Leitvorrichtung (4, 9, 10) an den Balg (7) anschließbar ist wobei die Vorrichtung einen Träger (2) für einen expandierbaren Balg (7) aufweist wobei der Träger (2) ringartig ausgebildet ist, so dass ein Ring-Balgsystem entsteht, **dadurch gekennzeichnet, dass** die Vorrichtung eine Steuerung derart aufweist, dass vollständig oder in Teilen die Verfahrensschritte "Beladen des Ring-Balgsystems" (12), "Transport des Rohreifens auf dem Ring-Balgsystem" (13), "Vulkanisation des Reifens auf dem Ring-Balgsystem" (14), "Transport des vulkanisierten Reifens auf dem Ring-Balgsystem" (15), "Entladen des vulkanisierten Reifens vom Ring-Balgsystem" (16) und "Transport des Ring-Balgsystems ohne Reifen" (17) durchgeführt werden.

8. Vorrichtung zum Vulkanisieren von Reifen nach Anspruch 7, **dadurch gekennzeichnet, dass** ein Reifen auf einem Ring-Balgsystem (1) transportierbar und vulkanisierbar ist.

9. Vorrichtung zum Vulkanisieren von Reifen nach Anspruch 7, **dadurch gekennzeichnet, dass** ein Ring-Balgsystem (1) ein fester Bestandteil der Reifenheizpresse (20) ist, mit der ein Reifen vulkanisierbar ist.

10. Vorrichtung zum Vulkanisieren von Reifen nach mindestens einem der Ansprüche 7 bis 9, **dadurch gekennzeichnet, dass** sie in dem Ring-Balgsystem (1) eine innenliegende Leitstruktur (4, 9, 10) für ein Medium aufweist, die von einem Anschlussstück (11) zum Balg (7) führt.

11. Vorrichtung zum Vulkanisieren von Reifen nach Anspruch 10, deren Balg (7) durch die Zufuhr oder Abfuhr eines Fluides expandierbar oder kontrahierbar ist und die die zur Vulkanisation des Reifens benötigte Temperatur ganz oder teilweise über das Fluid im Balg (7) zuführt.

## Claims

1. Method for vulcanizing tyres, in which the tyre to be vulcanized is inserted in the region of a tyre heating press (20) into a mould (21, 22) and in which the mould (21, 22) is heated and in which a heat transfer fluid is conducted into the region of the inner surface of the tyre, and also in which a carrier (2) for an expandable bellows (7) is used, wherein the carrier (2) is provided with a ring-like design, and wherein the fluid is introduced into a bellows (7), such that a ring/bellows system is produced, **characterized in that** the method steps "loading of the ring/bellows system" (12), "transport of the green tyre on the ring/bellows system" (13), "vulcanization of the tyre on the ring/bellows system" (14), "transport of the vulcanized tyre on the ring/bellows system" (15), "unloading of the vulcanized tyre from the ring/bellows system" (16) and "transport of the ring/bellows system without a tyre" (17) are carried out in full or in parts.

2. Method for vulcanizing tyres according to Claim 1, **characterized in that** a ring/bellows system (1) is used as a mobile constituent part of a tyre heating press (20), a tyre being transported on said ring/bellows system in the production process and the tyre being vulcanized on said ring/bellows system.

3. Method for vulcanizing tyres according to Claim 1, **characterized in that** a ring/bellows system (1) is a fixed constituent part of a tyre heating press (20) .

4. Method for vulcanizing tyres according to one of Claims 1 to 3, **characterized in that** the individual steps of the method together form a cycle.

5. Method for vulcanizing tyres according to at least one of the preceding claims, **characterized in that** the bellows (7) of the ring/bellows system (1) is expanded during the transport of the green tyre (18) and/or the vulcanized tyre.

6. Method for vulcanizing tyres according to at least one of the preceding claims, **characterized in that**, for at least one individual process step, a medium under a pressure of between 1 bar and 30 bar and with a temperature of between 10°C and 200°C is pumped into or out of the ring/bellows system (1).

7. Apparatus for vulcanizing tyres, having at least one heatable mould (21, 22) for the tyre to be vulcanized and a conducting apparatus (4, 9, 10) for a fluid intended for heat input, wherein the conducting apparatus (4, 9, 10) can be connected to the bellows (7), wherein the apparatus has a carrier (2) for an expandable bellows (7), wherein the carrier (2) is of ring-like design, such that a ring/bellows system is produced, **characterized in that** the apparatus has a control unit such that the method steps "loading of the ring/bellows system" (12), "transport of the green tyre on the ring/bellows system" (13), "vulcanization of the tyre on the ring/bellows system" (14), "transport of the vulcanized tyre on the ring/bellows system" (15), "unloading of the vulcanized tyre from the ring/bellows system" (16) and "transport of the ring/bellows system without a tyre" (17) are carried out in full or in parts.

8. Apparatus for vulcanizing tyres according to Claim 7, **characterized in that** a tyre can be transported and vulcanized on a ring/bellows system (1).

9. Apparatus for vulcanizing tyres according to Claim 7, **characterized in that** a ring/bellows system (1) is a fixed constituent part of the tyre heating press (20), said ring/bellows system being able to be used to vulcanize a tyre.

10. Apparatus for vulcanizing tyres according to at least one of Claims 7 to 9, **characterized in that** it has, in the ring/bellows system (1), an internal conducting structure (4, 9, 10) for a medium, said internal conducting structure leading from a connection piece (11) to the bellows (7).

11. Apparatus for vulcanizing tyres according to Claim 10, the bellows (7) of which can be expanded or contracted by the supply or removal of a fluid and which supplies the temperature required for vulcanization of the tyre entirely or partially via the fluid in the bellows (7).

## Revendications

1. Procédé de vulcanisation de pneumatiques dans lequel le pneumatique à vulcaniser est inséré dans un moule (21, 22) au niveau d'une presse à pneumatiques chauffante (20) et dans lequel le moule (21, 22) est chauffé et dans lequel un fluide de transfert de chaleur est guidé jusque dans la zone de la surface intérieure du pneumatique et dans lequel un support (2) est utilisé pour un soufflet expansible (7), le support (2) étant doté d'une forme annulaire, et le fluide étant introduit dans un soufflet (7) de manière à créer un système à soufflet annulaire, **caractérisé en ce que** les étapes de procédé « chargement du système à soufflet annulaire » (12), « transport du pneumatique brut sur le système à soufflet annulaire » (13), « vulcanisation du pneumatique sur le système à soufflet annulaire » (14), « transport du pneumatique vulcanisé sur le système à soufflet annulaire » (15), « déchargement du pneumatique vulcanisé du système à soufflet annulaire » (16) et « transport du système à soufflet annulaire sans pneumatique » (17) sont totalement ou partiellement réalisées.

2. Procédé de vulcanisation de pneumatiques selon la revendication 1, **caractérisé en ce qu'**un système à soufflet annulaire (1) est utilisé comme élément mobile d'une presse à pneumatiques chauffante (20) sur laquelle un pneumatique est transporté dans le processus de fabrication et sur lequel le pneumatique est vulcanisé.

3. Procédé de vulcanisation de pneumatiques selon la revendication 1, **caractérisé en ce qu'**un système à soufflet annulaire (1) fait partie intégrante d'une presse à pneumatiques chauffante (20).

4. Procédé de vulcanisation de pneumatiques selon l'une des revendications 1 à 3, **caractérisé en ce que** les différentes étapes du procédé forment conjointement un cycle.

5. Procédé de vulcanisation de pneumatiques selon l'une au moins des revendications précédentes, **caractérisé en ce que** le soufflet (7) du système à soufflet annulaire (1) est expansé pendant le transport du pneumatique brut (18) et/ou du pneumatique vulcanisé.

6. Procédé de vulcanisation de pneumatiques selon l'une au moins des revendications précédentes, **caractérisé en ce que**, pour au moins une étape de processus élémentaire, un milieu se trouvant à une pression comprise entre 1 bar et 30 bars et à une température comprise entre 10 °C et 200 °C est amené dans le système à soufflet annulaire (1), ou est évacué de celui-ci, par pompage.

7. Dispositif de vulcanisation de pneumatiques, qui comporte au moins un moule chauffant (21, 22) destiné au pneumatique à vulcaniser et un dispositif de guidage (4, 9, 10) destiné à un fluide prévu pour fournir de la chaleur, le dispositif de guidage (4, 9, 10) pouvant être raccordé au soufflet (7), le dispositif comportant un support (2) destiné à un soufflet expansible (7), le support (2) ayant une conception annulaire de manière à créer un système à soufflet annulaire,
**caractérisé en ce que** le dispositif comporte une commande de manière à ce que les étapes de processus « chargement du système à soufflet annulaire » (12), « transport du pneumatique brut sur le système à soufflet annulaire » (13), « vulcanisation du pneumatique sur le système à soufflet annulaire » (14), « transport du pneumatique vulcanisé sur le système à soufflet annulaire » (15), « déchargement du pneumatique vulcanisé du système à soufflet annulaire » (16) et « transport du système à soufflet annulaire sans pneus » (17) soient entièrement ou partiellement réalisées.

8. Dispositif de vulcanisation de pneumatiques selon la revendication 7, **caractérisé en ce qu'**un pneumatique peut être transporté et vulcanisé sur un système à soufflet annulaire (1).

9. Dispositif de vulcanisation de pneumatiques selon la revendication 7, **caractérisé en ce qu'**un système à soufflet annulaire (1) fait partie intégrante de la presse à pneumatiques chauffante (20) avec laquelle un pneumatique peut être vulcanisé.

10. Dispositif de vulcanisation de pneumatiques selon l'une au moins des revendications 7 à 9, **caractérisé en ce qu'**il comporte dans le système à soufflet annulaire (1) une structure de guidage interne (4, 9, 10) destinée à un milieu qui est guidé vers le soufflet (7) par une pièce de raccordement (11).

11. Dispositif de vulcanisation de pneumatiques selon la revendication 10, dont le soufflet (7) est expansible ou rétractable par amenée ou évacuation d'un fluide et qui fournit la température nécessaire à la vulcanisation du pneumatique entièrement ou partiellement par le biais du fluide dans le soufflet (7) .
